# EUROPEAN PATENT SPECIFICATION

(11) **EP 4 355 580 B1**
(45) Date of publication and mention of the grant of the patent: **23.07.2025**
(21) Application number: 22738728.9
(22) Date of filing: 16.06.2022
(51) Int. Cl.: B41J 2/21, B41J 2/515

(54) **A METHOD FOR ASSESSING THE PRINT RESULT OF AN INK-JET PRINTING DEVICE AND PRINTED SUPPORT MEANS HAVING A CALIBRATION ELEMENT**
VERFAHREN ZUR BEURTEILUNG DES DRUCKERGEBNISSES EINER TINTENSTRAHLDRUCKVORRICHTUNG UND BEDRUCKTE TRÄGERMITTEL MIT EINEM KALIBRIERUNGSELEMENT
PROCÉDÉ D'ÉVALUATION DU RÉSULTAT D'IMPRESSION D'UN DISPOSITIF D'IMPRESSION À JET D'ENCRE ET MOYEN DE SUPPORT IMPRIMÉ COMPORTANT UN ÉLÉMENT D'ÉTALONNAGE

(30) Priority: 17.06.2021 IT 202100015875
(43) Date of publication of application: 24.04.2024
(73) Proprietor: Maccari, Antonio, 56125 Pisa (IT)
(72) Inventor: Maccari, Antonio, 56125 Pisa (IT)
(74) Representative: Colò, Chiara
(86) International application number: PCT/IB2022/055571
(87) International publication number: WO 2022/264074

(56) References cited:
- EP-A1- 2 756 661
- EP-A1- 2 938 497
- WO-A1-2021/066830
- ES-U- 1 161 733
- US-A1- 2015 251 416
- US-A1- 2015 375 550

## Description

The invention relates to a method for assessing the print result of an ink-jet printing device in order to obtain information useful for calibrating an ink-jet printing device.

The invention further relates to print support means having a surface on which a calibration element has been printed, which can be used in the above-mentioned method.

In multiple fields of the technology, ink-jet printing devices having a certain number of printing bars are used, each of which comprises a plurality of printing heads side by side.

The printing devices of the above-mentioned type are generally used to apply one or more inks, according to a desired pattern, on supports to be printed which are moved below the printing bars along a preset advancement direction. Each printing bar is generally configured to apply a given ink and extends transversally, for example perpendicularly, to the advancement direction of the supports to be printed. From the combination of the patterns printed with each ink, a desired image is reproduced on the support.

The ink-jet printing devices need to be periodically calibrated by printing a calibration target on a print support. A calibration target is normally a set of coloured areas or patches, printed with known amounts of ink. The calibration target is measured with a measurement instrument, for example a spectrometer, which measures the colour of each patch for subsequent processing.

In some technical fields, in which it is necessary to print on supports having a significant dimension transversally to the advancement direction of the supports, printing bars are used whose length, i.e., whose dimension taken transversally to the advancement direction, is very significant. For example, this situation occurs in the ceramic sector, wherein ceramic slabs are produced and printed which can have a width greater than one metre, but also in the sector of printing on paper or on fabric.

In these cases, to calibrate the printing device, it is known to print a calibration target whose width is at least equal to the length of the printing bars. This calibration target needs to be measured with measurement devices of known type, which is not an easy operation. In fact, it is difficult, if not impossible, to have measurement devices available which are capable of acquiring, in a single step, a calibration element whose width is at least equal to the length of the printing bar.

EP 2756661 discloses a method for controlling a colour calibration target to be used during a digital printing process, i.e., to determine if the calibration target has been printed correctly and can therefore be used successfully for further operations, in particular to generate a descriptor of the calibration target, i.e., a file containing information on the calibration target.

To this end, EP 2756661 teaches to use a printing device to print a calibration target comprising a plurality of coloured zones, each of which corresponds to a predetermined combination of inks which the printing device is capable of printing. The calibration target further comprises a plurality of control zones for controlling whether the printing heads of the printing device apply the respective inks uniformly, or whether there is a lack of uniformity between one printing head and the other.

Each control zone is printed by a single printing head and is therefore obtained with a single ink. Each printing head can print several control zones, corresponding to different nominal amounts of ink, i.e., different printing densities.

The control zones and coloured zones are measured and their measurements are used for different purposes.

In particular, the measurements of the control zones are processed to check whether the corresponding printing heads meet a predetermined uniformity criterion.

If it is determined from the measurements of the control zones that the uniformity criterion is met, it is possible to continue to process the data deriving from the measurement of the calibration target, by taking into account the data related to the coloured zones. If, on the other hand, by measuring the control zones it is determined that one or more printing heads, for one or more values of the printing density considered, do not meet the uniformity requirements, an alarm message or signal is generated to allow an operator to intervene in the printing process.

The coloured zones and the control zones can be measured in a single measurement step or in several measurement steps. More specifically, the coloured zones can be measured during the same measurement step in which the control zones are measured, or they can be measured only after the control zones have been measured and have made it possible to determine that the printing heads work sufficiently uniformly.

In any case, the control zones are used to determine whether the coloured zones forming the calibration target can be successfully processed. In EP 2756661, the measurements of the control zones are not combined with the measurements of the control zones.

Other examples of calibration targets according to the state of the art are known from EP 2938497 and ES 1161733U.

An object of the invention is to improve the calibration of an ink-jet printing device, particularly but not exclusively intended for applying inks on ceramic supports, but also on supports of other materials, for example paper or fabric.

Another object is to provide a calibration element, suitable for calibrating an ink-jet printing device, which can be easily measured with ordinary measurement devices, in particular with acquisition devices which do not have a very large acquisition area.

Owing to the first aspect of the invention, it is possible to calibrate ink-jet printing devices comprising one or more printing bars having relevant longitudinal dimensions, for example of several tens of centimetres, without necessarily using special measurement devices which are expensive and difficult to find.

In fact, the calibration element is measured, for example scanned, by means of a plurality of partial measurements, which can be carried out one at a time, using a simple and compact measurement device.

The latter can for example be positioned on a surface region of the print support means having the calibration element, to measure only that region, for example by scanning it. Thereafter, the measurement device is moved at another region of the calibration element to also measure this region as well, and so on until the entire calibration element has been measured. At this point, the data obtained from the partial measurements and their subsequent analysis can be combined to obtain information on the ink-jet device in its entirety, which makes it possible to obtain information on all the printing heads which make up the ink-jet device.

In an embodiment, for calibrating the ink-jet printing device there is provided to reconstruct the calibration element by processing the information obtained from the partial measurements of the parts of the calibration element which has been printed on the print support means by the ink-jet printing device.

In other words, the measurement of the calibration element is divided into a plurality of images and therefore of partial measurements, each of which provides information on a part of the calibration element. By processing the information obtained during the partial measurements, it is possible to reconstruct the entire calibration element, which can be used to calibrate the ink-jet printing device.

In an embodiment, a virtual image of the calibration element is printed, the virtual image comprising a plurality of portions of the calibration element, said plurality of portions comprising at least a first portion and at least a second portion offset with respect to one another, an edge of the first portion which extends parallel to the advancement direction being aligned with an edge of the second portion.

In an embodiment, the print support means comprise a single print support on which the entire virtual image of the calibration element is printed.

In an alternative embodiment, the print support means comprise a plurality of print supports on each of which a part of the virtual image of the calibration element has been printed.

The part of the virtual image of the calibration element that has been printed on a print support of the plurality of print supports can comprise a single portion of the calibration element.

In a second aspect of the invention, there is provided a print support having a surface on which a plurality of portions of a calibration element are printed, said plurality of portions comprising at least a first portion of the calibration element and at least a second portion of the calibration element offset with respect to one another, an edge of the first portion which extends along a direction being aligned with an edge of the second portion adjacent to the first portion.

The print support provided by the second aspect of the invention can be used in the method according to the first aspect of the invention and can be an example in which the entire virtual image of the calibration element is printed on a single print support.

In a third aspect of the invention, print support means are provided comprising a plurality of print supports on each of which a portion of a calibration element is printed, an identification number being printed on each print support and associated with the corresponding portion of the calibration element, the identification number being intended to identify the calibration element after a plurality of patches of each portion have been measured by a measurement device.

The print support means according to the third aspect of the invention can be used in the method according to the first aspect of the invention and can be an example in which each portion of the calibration element is printed on a specific print support.

In a fourth aspect of the invention, a print support is provided having a surface on which at least a first portion of a calibration element and at least a part of a second portion of the calibration element are printed, said at least a first portion and said at least a part of the second portion being offset with respect to one another, an edge of said at least a first portion which extends along a direction being aligned with an edge of said at least a part of the second portion adjacent to said at least a first portion.

The print support according to the fourth aspect of the invention can be used in the method according to the first aspect of the invention and is an example in which the virtual image of the calibration element is printed on multiple print supports.

The invention can be better understood and implemented with reference to the attached drawings, which illustrate some embodiments thereof by way of non-limiting example, wherein:
Figure 1 is a schematic plan view showing print support means comprising a single print support having a plurality of portions of a calibration element;
Figure 2 is a schematic plan view showing an embodiment of the print support of Figure 1, made using four inks;
Figure 3 is a schematic plan view showing another embodiment of the print support of Figure 1, made using a single ink;
Figure 4 is a schematic plan view showing a virtual image of a calibration element;
Figure 5 is a schematic plan view showing print support means according to an alternative embodiment, comprising two print supports obtained respectively by printing the image part to the left of the line R1 of Figure 4 and the image part to the right of the line R2 of Figure 4;
Figure 6 is a schematic plan view showing print support means according to another alternative embodiment, comprising two print supports obtained respectively by printing the image part above the line R3 of Figure 4 and the image part below the line R4 of Figure 4;
Figure 7 is a schematic plan view showing print support means according to a further alternative embodiment, comprising four print supports on each of which a portion of the image of Figure 4 is printed;
Figure 8 is a schematic plan view showing print support means according to another alternative embodiment, in which the entire image of a four-colour calibration element is printed on a single print support;
Figure 9 is a schematic plan view showing print support means according to a further alternative embodiment, in which the entire image of a calibration element comprising a single colour is printed on a single print support.

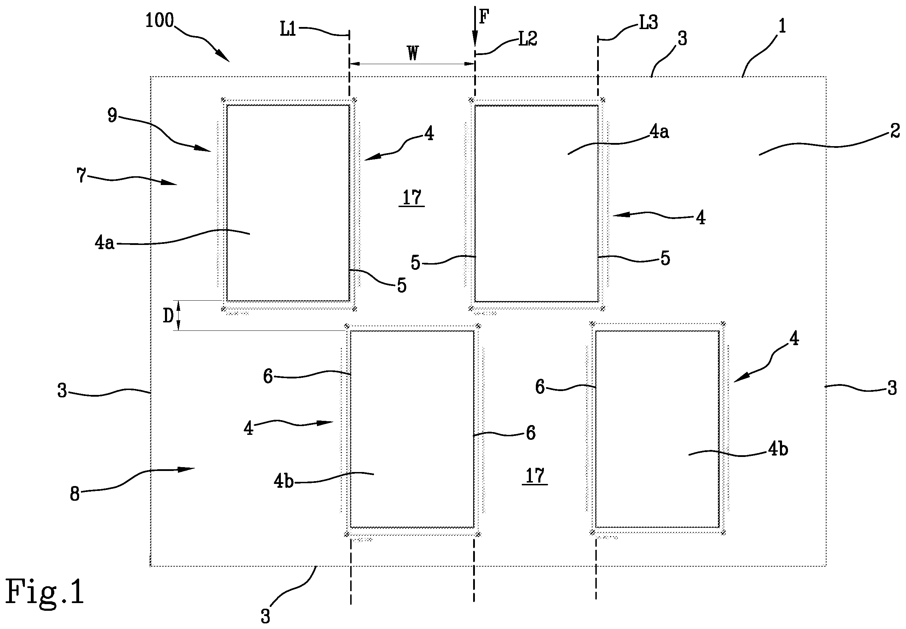

Figure 1 shows print support means 100 comprising a print support 1, delimited by a print surface 2 on which it is possible to apply one or more inks according to respective desired patterns.

The print support 1 can be a ceramic support, for example a tile, or a support made of paper, or fabric, or other materials.

The print support 1 can have a quadrangular plan shape, for example like a rectangle or a square. Alternatively, the print support 1 can be a portion of continuous web, or it can have any other shape.

The print support 1 is delimited by a plurality of sides 3.

The print support 1 is intended to interact with an ink-jet printing device not shown, suitable for applying one or more inks according to a desired pattern on the print support 1. To this end, the printing device and the print support 1 are movable with respect to one another in an advancement direction F. For example, the printing device can be arranged in a fixed position, while the print support 1 advances near the printing device by moving along the advancement direction F. Alternatively, the print support 1 can be arranged in a fixed position, while the printing device moves in the advancement direction F.

The printing device comprises at least one printing bar not shown, preferably a plurality of printing bars extending transversally, for example perpendicularly, to the advancement direction F. The printing bars cover the entire width of the print support 1 transversally to the advancement direction F.

Each printing bar comprises a plurality of printing heads arranged side by side along the printing bar. Each printing head comprises at least one nozzle for applying, on the print support 1, respective drops of ink.

Different printing bars can be configured to print different inks. In an example embodiment, four printing bars can be provided, configured to apply cyan, magenta, yellow and black inks, respectively. In this case, the printing device works according to the four-colour principle. However, the printing device can comprise a number of bars other than four and/or operate according to techniques other than four-colour printing.

The printing device is configured to print on the print surface 2 of the print support 1 a calibration element comprising a plurality of portions 4 of the calibration element, the set of which is intended to calibrate the printing heads of the printing device.

The portions 4 of the calibration element can have a square or rectangular shape.

In the example shown in Figure 1, the portions 4 of the calibration element have been depicted as empty rectangles. This has been done because Figure 1 is simply intended to show the layout which the portions 4 of the calibration element have on the print support 1. It is understood that the portions 4 of the calibration element can be parts of any desired calibration element, i.e., of a calibration element whose coloured zones or patches can be set according to any kind of calibration elements. Some examples of how the portions 4 of the calibration element can be made will be shown below. In the example shown in Figure 1, the portions 4 of the calibration element comprise at least a first portion 4a and at least a second portion 4b, which are arranged on the print surface 2 in a position offset with respect to one another. The first portion 4a and the second portion 4b are offset along the advancement direction F. This means that the first portion 4a and the second portion 4b are not at the same level along the advancement direction F, since the first portion 4a is arranged downstream of the second portion 4b with respect to the advancement direction F.

More specifically, there is provided a plurality of first portions 4a, aligned with each other along a transverse direction, in particular perpendicular, to the advancement direction F, and a plurality of second portions 4b, aligned with each other along a transverse direction, in particular perpendicular, to the advancement direction F.

The first portions 4a and the second portions 4b which are in adjacent positions transversally to the advancement direction F are delimited by edges aligned along the advancement direction F. In the illustrated example, this means that each first portion 4a is delimited by at least one edge 5, extending in the advancement direction F, which is aligned with a further edge 6 of the second portion 4b arranged in an adjacent position, i.e., closest, to the second portion 4a, as shown by the straight line L1. This means that, by moving perpendicularly to the advancement direction F on the print surface 2, the second portion 4b begins where the first portion 4a ends.

Owing to the offset arrangement of the portions 4 of the calibration element, and using a calibration element suitably made, it is possible to ensure that all the nozzles of all the printing heads forming each printing bar print on the print surface 2.

The first portions 4a can be arranged along a first line 7 extending transversally, in particular perpendicularly, to the advancement direction F. The second portions 4b can instead be arranged along a second line 8 extending transversally, in particular perpendicularly, to the advancement direction F. The first line 7 and the second line 8 are arranged in sequence along the advancement direction F.

In the illustrated example, the first line 7 is formed by two portions 4a and the second line 8 is formed by two portions 4b. However, this condition is not necessary and the number of portions of the calibration element present in each line can be different from two.

An unprinted area 17 is interposed between two first portions 4a arranged in sequence transversally to the advancement direction F, i.e., belonging to the first line 7, and two second portions 4b arranged in sequence transversally to the advancement direction F, i.e., belonging to the second line 8.

When a first portion 4a is interposed between two second portions 4b, the first portion 4a is delimited by two edges 5 each of which is aligned with a corresponding edge 6 of a second portion 4b, as shown by the lines L2 and L3 in Figure 1.

A plurality of graphic reference signs 9, of known type, is arranged along a peripheral region of each portion 4, the graphic reference signs 9 being arranged to allow to identify the portions 4 of the calibration element after a plurality of patches forming each portion 4 has been measured by a measurement device, for example acquired by a scanning device.

The graphic reference signs 9 can extend along all the edges of a portion 4, so as to define a frame around the portion 4. The graphic reference signs 9 extend outside each portion 4.

The portions 4 can be spaced along the advancement direction F, for example by a distance D shown in Figure 1.

The portions 4 can have an area of dimensions measurable by portable and compact measurement devices available on the market, for example an area of 20 cm X 30 cm.

When it is desired to calibrate the printing device, the latter prints the portions 4 on the print surface 2.

Subsequently, each portion 4 is measured using a measurement device, suitable for measuring the colour of the patches making up the portion 4. The measurement device can comprise a scanning device, for example a spectral scanner, but also a different type of colour measurement device, based for example on RGB technology, such as a camera.

To this end, the scanning device or more generally the measurement device can be restning on the print surface 2 at each portion 4, so as to acquire, one after the other, the images of the portions 4. A plurality of partial measurements of the calibration element are thus carried out. The images acquired during each partial measurement are analysed and processed by combining them as if they were part of a single calibration element, having a width, perpendicular to the advancement direction F, equal to the sum of the widths W of all the portions 4. The widths W of the portions 4 can be equal to each other.

The information obtained by processing each image acquired by the measurement device, i.e., the images of each portion 4, are then processed according to known techniques and used to calibrate the printing heads of the printing device, so that the nozzles of the individual printing heads which are part of a printing bar discharge the ink uniformly on the supports to be printed, i.e., without inconsistency between one nozzle and the other in the amounts of ink applied by each nozzle.

It is thereby possible to calibrate printing devices having printing bars of significant size, using compact sized acquisition devices, which are easy to transport and handle, as well as inexpensive and easily available.

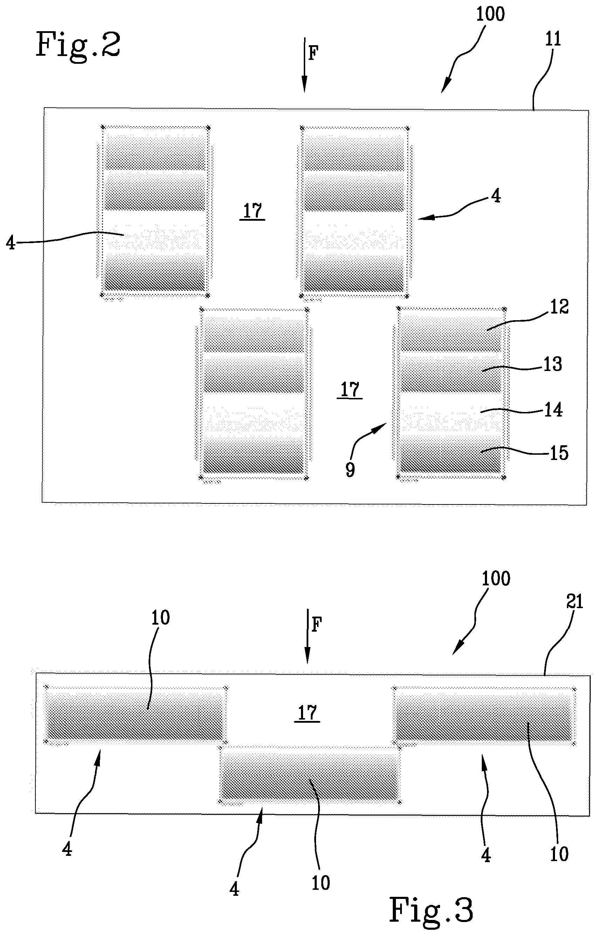

Figure 2 shows an embodiment of print support means 100 comprising a print support 11 on which a calibration element is printed, the calibration element having the layout shown in Figure 1.

In this case, each portion 4 comprises four coloured regions printed with different inks applied by distinct printing bars of the printing device, which works according to the four-colour technique.

In particular, each portion 4 comprises a first coloured region 12, a second coloured region 13, a third coloured region 14 and a fourth coloured region 15, arranged in sequence along the advancement direction F.

The first coloured region 12 can be for example printed with cyan ink, the second coloured region 13 with magenta ink, the third coloured region 14 with yellow ink and the fourth coloured region 15 with black ink.

Each coloured region 12, 13, 14, 15 is formed by lines of patches having a constant printing density along a direction perpendicular to the advancement direction F and a printing density for example gradually increasing or decreasing along the advancement direction F.

Figure 3 shows a further example of print support means 100 comprising a print support 21 on which a calibration element having a layout similar to that shown in Figure 1 is printed.

In this example, each portion 4 comprises a coloured region printed with a single ink, for example cyan, and is formed by lines 10 of patches having a constant printing density along a direction perpendicular to the advancement direction F and a gradually increasing printing density along the advancement direction F.

The examples of print support means 100 shown in Figures 1 to 3 comprise a single print support 1, or 11, or 21, on which the portions 4 of the calibration element are printed.

In an alternative embodiment, it is possible to divide the print support means into a plurality of distinct print supports, on each of which a part of the calibration element has been printed.

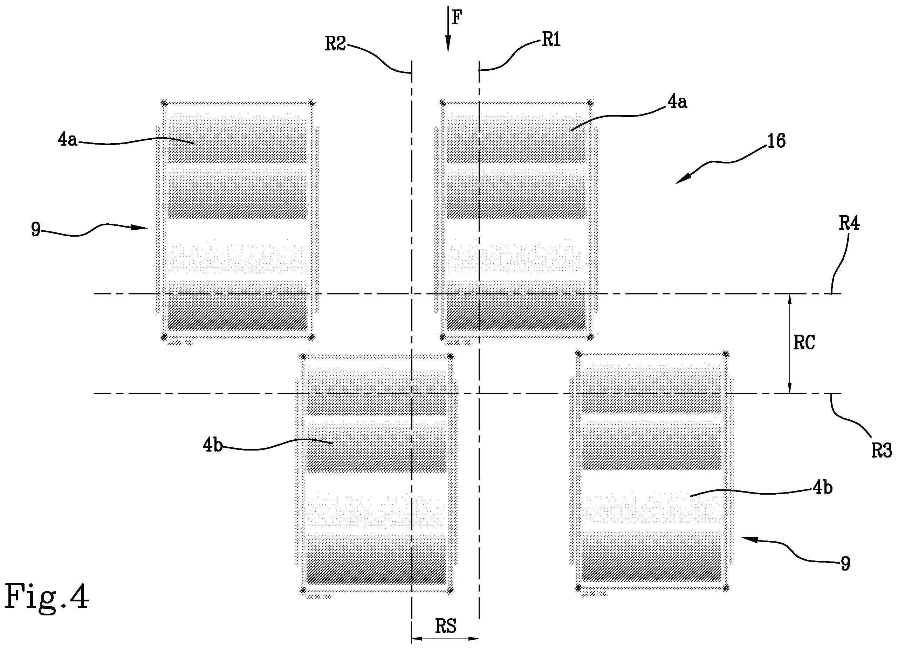

Figure 4 shows a virtual image 16 of a calibration element which is generated, for example in a control unit which controls an ink-jet printing device, by managing a printing process which the printing device implements.

The virtual image 16 can comprise a plurality of portions 4 of the calibration element which is desired to print on print support means. In the illustrated example, the calibration element defined by the portions 4 is the same calibration element which, in the example of Figure 2, has been printed on a single print support 11.

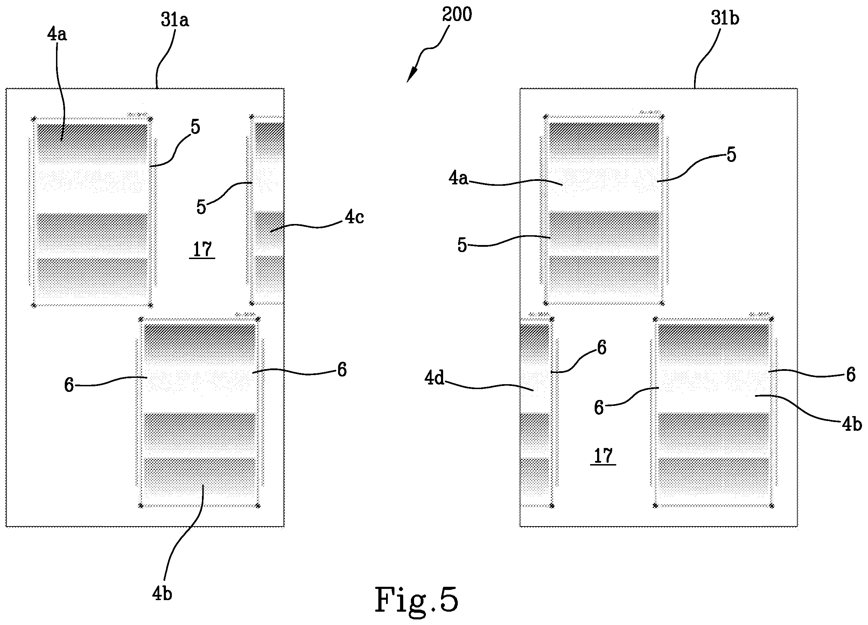

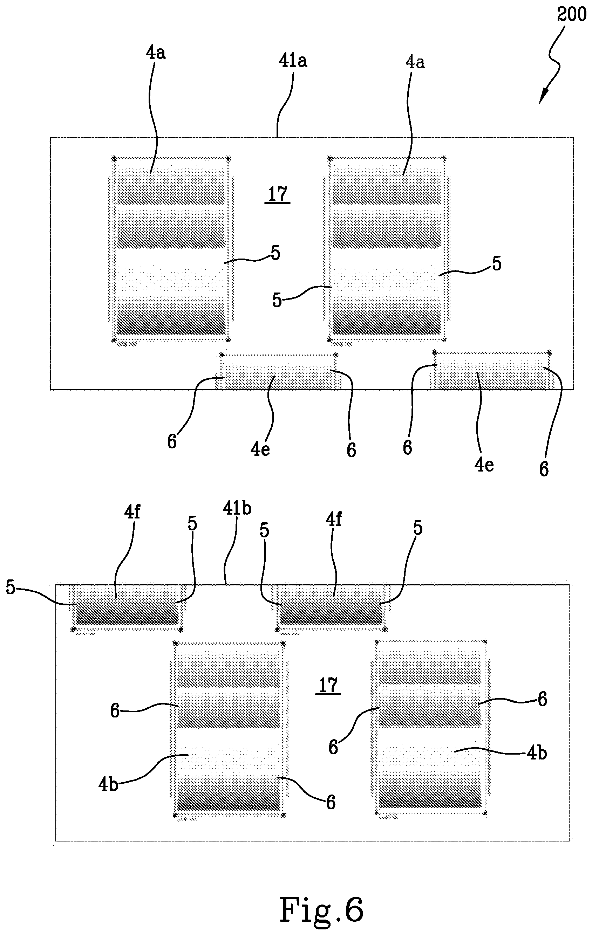

Unlike what is described with reference to Figure 2, it is possible to print the virtual image 16 of the calibration element on a plurality of print supports, as will be better described below with reference to Figures 5 and 6.

Figure 5 shows an example of print support means 200 comprising a plurality of print supports, in particular a first print support 31a and a second print support 31b. The first print support 31a and the second print support 31b can comprise respective ceramic tiles, in the case where the printing process in which the calibration element is to be used is a ceramic tile decoration process. In an alternative embodiment, in which the printing process in which the calibration element is used occurs on materials other than ceramic, the print support means 200 comprise a plurality of distinct supports made of the same material on which the printing process is intended to print, for example made of paper or, in an alternative embodiment, fabric.

Although print support means 200 are shown in the example of Figure 5 comprising only two print supports 31a, 31b, it is understood that the virtual image 16 of the calibration element to be printed can also be divided and printed on a number of print supports other than two.

As shown in Figure 4, the virtual image 16 of the calibration element to be printed was in this case divided along a first ideal line R1 and along a second ideal line R2.

In the illustrated example, the first ideal line R1 and the second ideal line R2 are straight lines, arranged parallel to the advancement direction F. This condition is not necessary, however, and the ideal lines R1 and R2 could also be lines which are not straight, or not arranged parallel to the advancement direction F.

The part of the virtual image 16 arranged to the left of the first ideal line R1 was printed on the first print support 31a, while the part of the virtual image 16 arranged to the right of the second print line R2 was printed on the second print support 31b.

In particular, the part of the virtual image 16 printed on the first print support 31a comprises a first portion 4a, a second portion 4b and an incomplete portion 4c. The first portion 4a and the second portion 4b are entire portions offset from each other along the advancement direction F, as previously described with reference to Figures 1 and 2. The incomplete portion 4c is a part of a first portion 4a of the virtual image 16, arranged adjacent to the second portion 4b printed entirely on the first support 31a. The incomplete portion 4c has an edge 5, arranged along the advancement direction F, which is aligned with an edge 6 of the second portion 4b, as better described above with reference to Figures 1 and 2.

The part of the virtual image 16 printed on the second support 31b comprises a first portion 4a, a second portion 4b, which have been printed entirely on the second support 31b and which are offset from each other along the advancement direction F, as previously described with reference to Figures 1 and 2. On the second support 31b there is also a further incomplete portion 4d, which corresponds to a part of a portion 4 included in the image 16. More specifically, the further incomplete portion 4d corresponds to a part of a second portion 4b of the virtual image 16, arranged in an adjacent position to the first portion 4a printed entirely on the second support 31b.

The position of the first ideal line R1 and the second ideal line R2 on the virtual image 16 is chosen so that the first ideal line R1 and the second ideal line R2 define in the virtual image 16 two image parts which have a common region or overlapping region RS. This is intended to ensure that all the points of the virtual image 16 are printed on the print support means 200.

During operation, the virtual image 16 which is to be printed on the support means 200 is generated or taken from a memory in the control unit which controls the ink-jet printing device.

Parts of the virtual image 16 are then printed on different print supports 31a, 31b, for example by positioning the print supports 31a, 31b in succession on a conveyor arranged below the ink-jet printing device. The print supports 31a, 31b are positioned on the conveyor taking care that there is an overlap between the image parts which are printed on each print support, so that all the portions 4 in which the calibration element has been divided are printed entirely on the print supports 31a, 31b.

The print supports 31a, 31b on which the portions 4 of the virtual image 16 have been printed are then measured, for example acquired, by the measurement device, by means of a plurality of measurements or partial acquisitions.

The graphic reference signs 9 allow each portion 4 to be correctly positioned with respect to a measurement area, for example an area of image acquisition, of the measurement device, even if the portions 4 are printed with edges not perfectly parallel to the edges of the corresponding print support.

The images of the portions 4 printed on each print support which have been measured by the measurement device, for example acquired by the scanning device, during the partial measurements are then processed and combined to reconstruct the entire calibration element, by which it is possible to calibrate the ink-jet printing device.

The incomplete portion 4c can be helpful in understanding, starting from the individual print supports 31a, 31b, how the image part printed on the print support 31a, 31b considered is positioned in the virtual image 16 of the calibration element.

Figure 6 shows print support means 200 according to an alternative embodiment, which comprise a plurality, specifically two, print supports 41a, 41b. In this case, on the first print support 41a the part of the virtual image 16 of the calibration element arranged above the ideal line R3 was printed, while on the second print support 41b the further part of the virtual image 16 arranged below the further ideal line R4 was printed.

In particular, on the first print support 41a two entire first portions 4a and two incomplete parts 4e of second portions 4b have been printed. On the second print support 41b, instead, two entire second portions 4b and two incomplete parts 4f of first portions 4a have been printed.

Again, the ideal line R3 and the further ideal line R4 define in the virtual image 16 two image parts which have an overlapping region or common region RC. This is intended to ensure that all the points of the virtual image 16 are printed on the print support means 200.

By printing the virtual image 16 on a plurality of print supports instead of on a single print support, relatively small print supports can be used, for example whose dimensions are equal to, or slightly greater than, the maximum size of the image acquisition area of the measurement device used.

This makes it easier to transport and handle the print supports on which the print of the virtual image 16 has been divided.

In an embodiment, the dimensions of the print supports 31a, 31b, 41a, 41b can be for example 30 cm x 40 cm.

It should be noted that the ideal lines R1, R2, R3, R4 are not actually present in the virtual image 16 of the calibration element, but are theoretical lines used in this description for a clearer understanding of Figures 5 and 6, which ideally divide the virtual image 16 into parts, whose arrangement and shape depend on how the print supports are positioned with respect to the ink-jet printing device during the printing process.

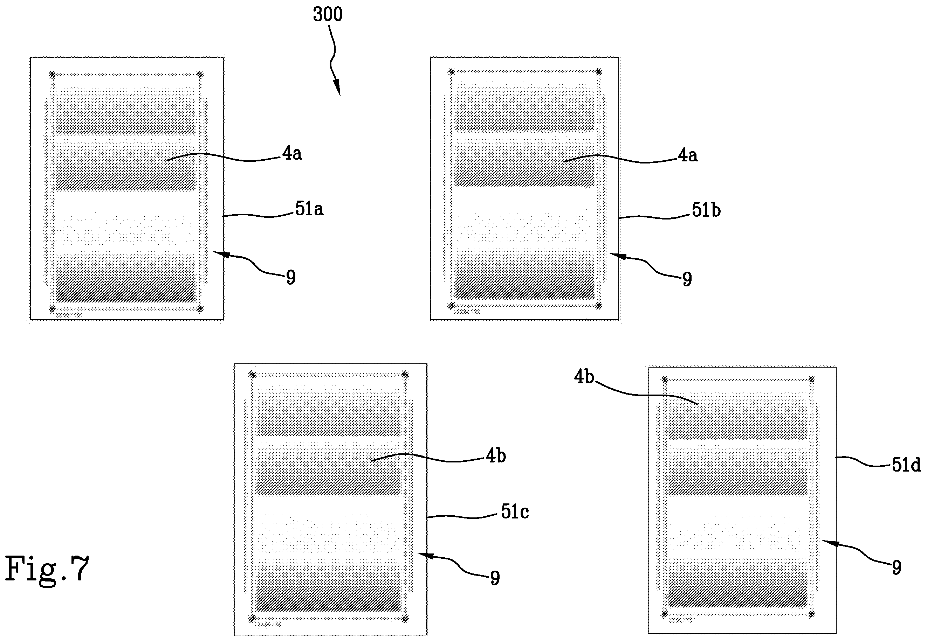

Figure 7 shows print support means 300 according to an alternative embodiment, comprising a plurality of print supports 51a, 51b, 51c, 51d on each of which a portion 4a or 4b of the virtual image 16 of the calibration element is printed. The portion 4a, 4b printed on each print support 51a, 51b, 51c, 51d is a complete portion chosen from the offset portions in which the calibration element has been divided in the virtual image 16, surrounded by the relative graphic reference signs 9. There are no incomplete portions on the print supports 51a, 51b, 51c, 51d.

An identification number associated with the portion 4 of the calibration element printed on that print support can be printed on each print support 51a, 51b, 51c, 51d. The identification number can be a sequential number. The identification number can be printed outside the portion 4, for example near the graphic reference signs 9. The identification number allows the control unit which controls the measurement processing process to recombine the measured values of the calibration element, after the measurements of each portion have been acquired by the measurement device.

The identification number can be provided not only on the print supports 51a, 51b, 51c, 51d described with reference to Figure 7, but also with reference to all the other print support means mentioned in this description. The print supports 51a, 51b, 51c, 51d are obtained from the virtual image 16 shown in Figure 4, by printing on the print support 51a the portion 4a at the top left in Figure 4, on the print support 51b the portion 4a at the top right in Figure 4, on the print support 51c the portion 4b at the bottom left in Figure 4, and on the print support 51d the portion 4b at the bottom right in Figure 4.

The dimensions of each print support 51a, 51b, 51c, 51d are only slightly larger than the dimensions of the portions 4 of the virtual image 16. This makes it possible to minimise the size of the print supports 51a, 51b, 51c, 51d, which are particularly easy to transport and handle.

The number of portions 4 forming the virtual image 16 of the calibration element can be chosen freely.

The shape, size and number of portions 4 printed on the print support can vary, as can the shape, number and size of the incomplete portions which are printed on the single print support.

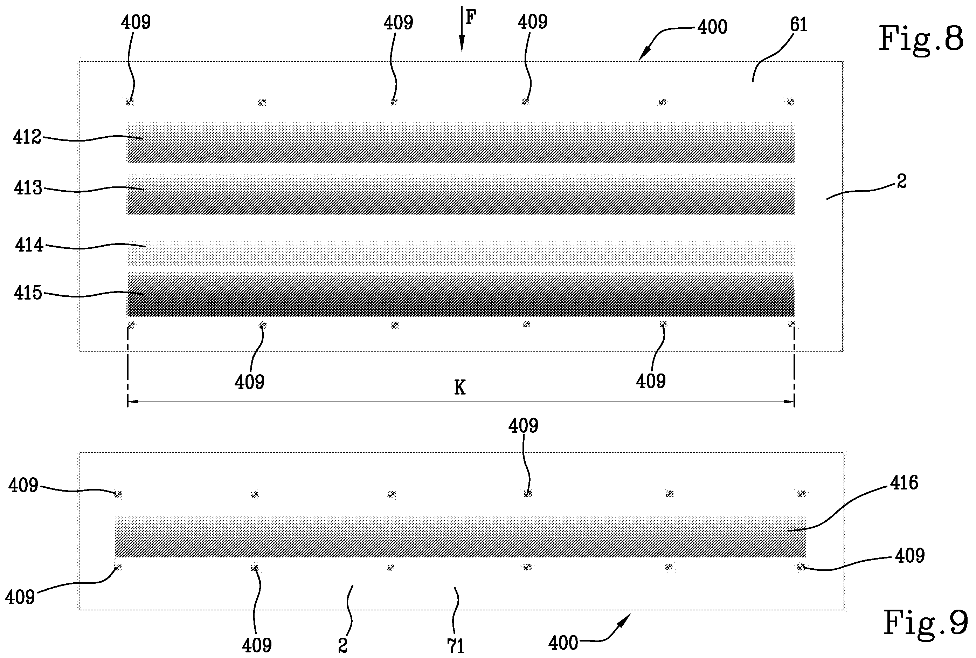

Figure 8 shows print support means 400 according to an alternative embodiment, comprising a single print support 61 which can be a ceramic slab, or a piece of fabric, or paper or other materials. A calibration element is provided on a surface 2 of the print support 61, which has been printed using an ink-jet printing device. The calibration element is intended to be processed in order to ensure that the printing heads of the ink-jet printing device apply the corresponding ink uniformly between one printing head and the other, or - more specifically - between one nozzle and the other of each printing head.

The calibration element is complete, in the sense that it has been entirely printed on the print support 61.

The print support 61 has been printed by mutually moving the print support 61 and the ink-jet printing device along the advancement direction F.

The ink-jet printing device to be calibrated comprises one or more printing bars, each of which has a plurality of nozzles mounted on an active portion of the printing bar. The active portions of the printing bars on which the nozzles are mounted each have a length K, which coincides with the maximum dimension along which the printing bar can print perpendicularly to the advancement direction F. The calibration element printed on the print support 61 has, perpendicular to the advancement direction, a dimension equal to the length K. Thereby, it is certain that all the nozzles of each printing bar apply the respective ink on the print support 61.

In the example shown in Figure 8, the calibration element printed on the print support 61 comprises a plurality of coloured regions, each of which is printed with a different colour ink. In particular, the calibration element of Figure 8 comprises a first coloured region 412 which can be for example printed with cyan ink, a second coloured region 413 which can be printed with magenta ink, a third coloured region 414 which can be printed with yellow ink and a fourth coloured region 415 which can be printed with black ink.

Each coloured region 412, 413, 414, 415 is formed by a plurality of lines of patches, each of which extends perpendicularly to the advancement direction F. The patches of each line have a constant printing density, while for example the printing density gradually increases along the advancement direction F.

The calibration element shown in Figure 8 further comprises a plurality of graphic reference signs 409, intended to allow the measurement device to correctly acquire the values of the calibration element patches. The graphic reference signs 409 are arranged upstream and/or downstream of the coloured regions 412, 413, 414, 415 with respect to the advancement direction **F,** i.e., above and/or below the coloured regions 412, 413, 414. 415. The graphic reference signs are distributed within the width K, i.e., within the maximum overall dimensions of the coloured regions 412, 413, 414, 415 measured perpendicularly to the advancement direction F. Thus, the patches of the reference element are printed by all the nozzles of the ink-jet printing device, and some nozzles of the ink-jet printing device print both the patches of the calibration element and the graphic reference signs 409.

During operation, the calibration element is printed on the surface 2 of the print support 61 by means of the ink-jet printing device. Next, the measurement device acquires a plurality of measurements of the patches present in the calibration element, for example by positioning the measurement device resting on the surface 2.

More specifically, since the dimensions of the calibration element are larger than the dimensions of the maximum image acquisition area of the measurement device, the measurement device carries out a plurality of partial measurements of the calibration element. During each partial measurement, the patches of a part of the calibration element compatible with the dimensions of the maximum area measurable by the measurement device are measured.

In the example of Figure 8, it is possible, for example, to measure, during a first partial measurement, the patches of the part of the calibration target defined by the two pairs of graphic reference signs 409 arranged more to the left. During a subsequent partial measurement, it is possible to measure the patches of the part of the calibration element defined between the second and the third pair of graphic reference signs 409, and so on until the entire calibration element is acquired by subsequent partial measurements. The information obtained from the individual partial measurements is subsequently combined, for example by means of a control unit of the measurement device, to calibrate the ink-jet printing device, for example so as to ensure that the printing nozzles of the ink-jet printing device, for the same amount of ink requested, produce an equivalent amount of ink with respect to each other.

Figure 9 shows print support means 400 comprising a print support 71 according to an alternative embodiment. While the print support 61 shown in Figure 8 had a calibration element comprising a plurality of coloured regions 412, 413, 414, 415 printed with different inks from each other, the print support 71 shown in Figure 9 has a calibration element comprising a single coloured region 416, i.e., it is made with a single type of ink, for example cyan ink. The coloured region 416 comprises a plurality of lines of patches, each line extending perpendicularly to the advancement direction F. The patches of each line have the same printing density, while for example the printing density increases by moving from one line of patches to another in parallel to the advancement direction F.

The image of the calibration element present on the print support 71 can be acquired by the measurement device by means of a plurality of partial measurements, during each of which the measurement device is moved to a different region of the print support 71 to measure the respective patches.

Summing up, in the method according to the invention the values of the patches of the calibration element are measured by means of a plurality of partial measurements, each of which allows the measurement of a part of the aforesaid calibration element. More specifically, each partial measurement can derive from a theoretical subdivision of the calibration element. The theoretical subdivision can occur after the calibration element has been printed, by subsequently moving the measurement device on the surface 2 to measure each time a different part of the print support. Alternatively, the theoretical subdivision can occur before the calibration element is printed, using a virtual image of the calibration element, which is divided into portions intended to be printed on different print supports or on a single print support.

It is thereby possible to simplify the measurement of the calibration element, which can occur with a simple measurement device having a small size, even in the case in which the maximum width K printable by the ink-jet printing device is significant.

In the foregoing description, calibration of an ink-jet printing device generally means a calibration aimed at ensuring that the printing heads of each printing bar which is included in the printing device apply uniform amounts of ink between one printing head and the other on the supports to be printed. In other words, the calibration is aimed at adjusting the printing heads so as to obtain a uniformity in the amount of ink applied by different printing heads which are required to print the same amounts of ink.

## Claims

1. A method comprising the steps of:
- providing an ink-jet printing device;
- providing print support means (100, 200, 300, 400) delimited by a print surface (2);
- printing a calibration element on the print support means (100, 200, 300, 400) using the ink-jet printing device, by moving the print support means (100, 200, 300, 400) and the ink-jet printing device with respect to one another along an advancement direction (F),
- using a measurement device, carrying out a plurality of partial measurements of respective parts of the calibration element printed on the print support means (100, 200, 300, 400);
- calibrating the ink-jet printing device by processing information obtained during the partial measurements,
**characterized in that** the calibration element has dimensions larger than the dimensions of the maximum image acquisition area of the measurement device and **in that** in order to calibrate the ink-jet printing device there is provided reconstructing the calibration element by combining information obtained from the partial measurements of said parts of the calibration element which has been printed on the print support means (100; 200; 300; 400), the partial measurements being carried out by positioning the measurement device on a region of the print surface (2) and acquiring the image of one of said parts of the calibration element, moving the measurement device at another region of the print surface (2) and acquiring the image of the corresponding part of the calibration element, and so on until the entire calibration element has been measured.

2. The method according to claim 1, wherein, during the step of printing the calibration element, at least one part of a virtual image (16) of the calibration element is printed, the virtual image (16) comprising a plurality of portions (4) of the calibration element, said plurality of portions (4) comprising at least a first portion (4a) and at least a second portion (4b) offset with respect to one another, an edge (5) of the first portion (4a) which extends parallel to the advancement direction (F) being aligned to an edge (6) of the second portion (4b).

3. The method according to claim 2, wherein the plurality of portions (4) comprises a plurality of first portions (4a) arranged along a first line (7) and a plurality of second portions (4b) arranged along a second line (8), the first line (7) and the second line (8) extending transversally to the advancement direction (F), the first portions (4a) arranged along the first line (7) being offset with respect to the second portions (4b) arranged along the second line (8).

4. The method according to claim 2 or 3, wherein the print support means (100; 200; 300) comprise a single print support (1; 11; 21) on which the entire virtual image (16) of the calibration element is printed.

5. The method according to claim 2 or 3, wherein the print support means (100; 200; 300) comprise a plurality of print supports (31a, 31b; 41a, 41b; 51a, 51b, 51c, 51d), a part of the virtual image (16) of the calibration element being printed on each print support (31a, 31b; 41a, 41b; 51a, 51b, 51c, 51d).

6. The method according to claim 5, wherein a single portion (4a, 4b) of said plurality of portions (4a, 4b) of the virtual image (16) of the calibration element is printed on each print support (51a, 51b, 51c, 51d).

7. The method according to claim 5, wherein an incomplete portion (4c, 4d, 4e, 4f) of the plurality of portions (4) is printed on at least one print support (31a, 31b, 41a, 41b), said incomplete portion (4c, 4d, 4e, 4f) being included in a portion (4) which is entirely printed on a further print support (31a, 31b; 41a, 41b) of the print support means (100; 200; 300).

8. The method according to any one of claims 2 to 7, wherein each portion (4) comprises a plurality of coloured regions (12, 13, 14, 15) arranged in a sequence along the advancement direction (F), each coloured region (12, 13, 14, 15) comprising at least one line of patches which have a constant printing density along a direction perpendicular to the advancement direction (F) and a printing density gradually increasing or decreasing along the advancement direction (F).

9. The method according to any one of claims 2 to 8, wherein graphic reference signs (9) are printed on the surface (2) of the print support means (100; 200; 300), the graphic reference signs being arranged outside the portions (4), for example delimiting each portion (4), and being usable for localising a portion (4) of the calibration element which can be measured by the measurement device.

10. The method according to claim 3, wherein a non-printed area (17) is interposed between two first portions (4a) arranged along the first line (7), and between two second portions (4b) arranged along the second line (8).

11. The method according to claim 1, wherein the calibration element comprises at least one coloured region (412, 413, 414, 415; 416) which has a width (K), measured perpendicularly to the advancement direction (F), equal to the maximum width printable by the ink-jet printing device.

12. The method according to claim 11, wherein the calibration element comprises a plurality of graphic reference signs (409) arranged upstream and/or downstream of said at least one coloured region (412, 413, 414, 415; 416) with respect to the advancement direction (F), the graphic reference signs (409) being absent outside the width (K) of said at least one coloured region (412, 413, 414, 415; 416).

13. The method according to any preceding claim, wherein the ink-jet printing device comprises a plurality of printing heads and wherein the step of calibrating is directed at making uniform the quantity of ink emitted by the printing heads, for a preset amount of ink requested to each printing head.

14. A print support (1; 11; 21) having a surface (2) on which a plurality of portions (4) of a calibration element is printed, **characterized in that** each portion (4) of said plurality of portions (4) being formed by a plurality of patches, said plurality of portions (4) comprising at least a first portion (4a) of the calibration element and at least a second portion (4b) of the calibration element offset with respect to one another, an edge (5) of the first portion (4a) which extends along a direction (F) being aligned with an edge (6) of the second portion (4b) adjacent to the first portion (4a), wherein the plurality of portions (4) comprises a first line (7) of first portions (4a) and a second line (8) of second portions (4b), the first line (7) and the second line (8) extending transversally to said direction (F), the first portions (4a) arranged along the first line (7) being offset with respect to the second portions (4b) arranged along the second line (8), a non-printed area (17) being interposed between two first portions (4a) arranged along the first line (7), and between two second portions (4b) arranged along the second line (8), wherein graphic reference signs (9) are printed on the surface (2) of the print support (1; 11; 21), the graphic reference signs being arranged outside each portion (4) for localising a portion (4) of the calibration element which can be measured by a measurement device.

15. A print support (31a; 31b; 41a; 41b) having a surface (2) on which at least a first portion (4a) of a calibration element is printed, **characterized in that** at least one part of a second portion (4b) of the calibration element is printed, said at least a first portion (4a) and said at least one part of the second portion (4b) being offset with respect to one another, an edge (5) of said at least a first portion (4a) which extends along a direction (F) being aligned with an edge (6) of said at least one part of the second portion (4b) adjacent to said at least a first portion (4a).

16. Print support means **characterized by** comprising a plurality of print supports (51a, 51b, 51c, 51d) on each of which a portion (4) of a calibration element is printed, an identification number being printed on each print support (51a, 51b, 51c, 51d) and associated to the corresponding portion (4) of the calibration element, the identification number being intended to identify the calibration element after a plurality of patches of each portion (4) have been measured by a measurement device, wherein each portion (4) of each print support (51a, 51b, 51c, 51d) is furthermore surrounded by graphic reference signs (9) for localising said portion (4).

## Patentansprüche

1. Verfahren, umfassend die folgenden Schritte:
- Bereitstellen einer Tintenstrahldruckvorrichtung;
- Bereitstellen von Druckträgermitteln (100, 200, 300, 400), die durch eine Druckoberfläche (2) begrenzt sind;
- Drucken eines Kalibrierungselements auf die Druckträgermittel (100, 200, 300, 400) unter Nutzung der Tintenstrahldruckvorrichtung, indem die Druckträgermittel (100, 200, 300, 400) und die Tintenstrahldruckvorrichtung zueinander entlang einer Vorschubrichtung (F) bewegt werden;
- Nutzen einer Messvorrichtung, die eine Vielzahl von Teilmessungen jeweiliger Teile des auf die Druckträgermittel (100, 200, 300, 400) gedruckten Kalibrierungselements durchführt;
- Kalibrieren der Tintenstrahldruckvorrichtung durch Verarbeiten von während der Teilmessungen gewonnenen Informationen,
**dadurch gekennzeichnet, dass** das Kalibrierungselement größere Abmessungen als die Abmessungen des maximalen Bilderfassungsbereichs der Messvorrichtung aufweist, und dadurch, dass das Rekonstruieren des Kalibrierungselements durch Kombinieren von von den Teilmessungen der Teile des Kalibrierungselements, das auf die Druckträgermittel (100; 200; 300; 400) gedruckt wurde, gewonnenen Informationen bereitgestellt ist, um die Tintenstrahldruckvorrichtung zu kalibrieren, wobei die Teilmessungen durch Positionieren der Messvorrichtung auf einer Region der Druckoberfläche (2) und Erfassen des Bilds von einem der Teile des Kalibrierungselements, Bewegen der Messvorrichtung an eine andere Region der Druckoberfläche (2) und Erfassen des Bilds des entsprechenden Teils des Kalibrierungselements und so weiter durchgeführt werden, bis das gesamte Kalibrierungselement gemessen wurde.

2. Verfahren nach Anspruch 1, wobei während des Schritts zum Drucken des Kalibrierungselements mindestens ein Teil eines virtuellen Bilds (16) des Kalibrierungselements gedruckt wird, wobei das virtuelle Bild (16) eine Vielzahl von Abschnitten (4) des Kalibrierungselements umfasst, wobei die Vielzahl von Abschnitten (4) mindestens einen ersten Abschnitt (4a) und mindestens einen zweiten Abschnitt (4b), die zueinander versetzt sind, umfasst und ein Rand (5) des ersten Abschnitts (4a), der sich parallel zur Vorschubrichtung (F) erstreckt, zu einem Rand (6) des zweiten Abschnitts (4b) ausgerichtet ist.

3. Verfahren nach Anspruch 2, wobei die Vielzahl von Abschnitten (4) eine Vielzahl von ersten Abschnitten (4a), die entlang einer ersten Linie (7) angeordnet sind, und eine Vielzahl von zweiten Abschnitten (4b), die entlang einer zweiten Linie (8) angeordnet sind, umfasst, wobei sich die erste Linie (7) und die zweite Linie (8) quer zur Vorschubrichtung (F) erstrecken und die ersten Abschnitte (4a), die entlang der ersten Linie (7) angeordnet sind, in Bezug auf die zweiten Abschnitte (4b), die entlang der zweiten Linie (8) angeordnet sind, versetzt sind.

4. Verfahren nach Anspruch 2 oder 3, wobei die Druckträgermittel (100; 200; 300) einen einzelnen Druckträger (1; 11; 21) umfassen, auf den das ganze virtuelle Bild (16) des Kalibrierungselements gedruckt wird.

5. Verfahren nach Anspruch 2 oder 3, wobei die Druckträgermittel (100; 200; 300) eine Vielzahl von Druckträgern (31a, 31b; 41a, 41b; 51a, 51b, 51c, 51d) umfassen und ein Teil des virtuellen Bilds (16) des Kalibrierungselements auf einen jeden Druckträger (31a, 31b; 41a, 41b; 51a, 51b, 51c, 51d) gedruckt wird.

6. Verfahren nach Anspruch 5, wobei ein einzelner Abschnitt (4a, 4b) der Vielzahl von Abschnitten (4a, 4b) des virtuellen Bilds (16) des Kalibrierungselements auf einen jeden Druckträger (51a, 51b, 51c, 51d) gedruckt wird.

7. Verfahren nach Anspruch 5, wobei ein unvollständiger Abschnitt (4c, 4d, 4e, 4f) der Vielzahl von Abschnitten (4) auf mindestens einen Druckträger (31a, 31b, 41a, 41b) gedruckt wird, wobei der unvollständige Abschnitt (4c, 4d, 4e, 4f) in einem Abschnitt (4) eingeschlossen ist, der vollständig auf einen weiteren Druckträger (31a, 31b; 41a, 41b) der Druckträgermittel (100; 200; 300) gedruckt wird.

8. Verfahren nach einem der Ansprüche 2 bis 7, wobei ein jeder Abschnitt (4) eine Vielzahl von farbigen Regionen (12, 13, 14, 15) umfasst, die in einer Abfolge entlang der Vorschubrichtung (F) angeordnet sind, wobei eine jede farbige Region (12, 13, 14, 15) mindestens eine Linie von Stücken umfasst, die eine konstante Druckdichte entlang einer Richtung senkrecht zur Vorschubrichtung (F) und eine Druckdichte, die entlang der Vorschubrichtung (F) stufenweise zu- oder abnimmt, aufweisen.

9. Verfahren nach einem der Ansprüche 2 bis 8, wobei grafische Referenzzeichen (9) auf die Oberfläche (2) der Druckträgermittel (100; 200; 300) gedruckt sind und die grafischen Referenzzeichen außerhalb der Abschnitte (4) angeordnet sind, beispielsweise begrenzend einen jeden Abschnitt (4) und nutzbar zum Verorten eines Abschnitts (4) des Kalibrierungselements, der von der Messvorrichtung gemessen werden kann.

10. Verfahren nach Anspruch 3, wobei ein nicht bedruckter Bereich (17) zwischen zwei ersten Abschnitten (4a), die entlang der ersten Linie (7) angeordnet sind, und zwischen zwei Abschnitten (4b), die entlang der zweiten Linie (8) angeordnet sind, eingesetzt ist.

11. Verfahren nach Anspruch 1, wobei das Kalibrierungselement mindestens eine farbige Region (412, 413, 414, 415; 416) umfasst, die eine Breite (K) aufweist, gemessen senkrecht zur Vorschubrichtung (F), die gleich der maximalen Breite ist, die durch die Tintenstrahldruckvorrichtung bedruckt werden kann.

12. Verfahren nach Anspruch 11, wobei das Kalibrierungselement eine Vielzahl von grafischen Referenzzeichen (409) umfasst, die stromaufwärts und/oder stromabwärts der mindestens einen farbigen Region (412, 413, 414, 415; 416) in Bezug auf die Vorschubrichtung (F) angeordnet sind, wobei die grafischen Referenzzeichen (409) außerhalb der Breite (K) der mindestens einen farbigen Region (412, 413, 414, 415; 416) fehlen.

13. Verfahren nach einem beliebigen vorhergehenden Anspruch, wobei die Tintenstrahldruckvorrichtung eine Vielzahl von Druckköpfen umfasst und wobei der Schritt zum Kalibrieren dazu dient, die von den Druckköpfen abgegebene Farbenmenge für eine voreingestellte Farbenmenge, die für jeden Druckkopf erforderlich ist, zu vereinheitlichen.

14. Druckträger (1; 11; 21), aufweisend eine Oberfläche (2), auf die eine Vielzahl von Abschnitten (4) eines Kalibrierungselements gedruckt werden, **dadurch gekennzeichnet, dass** ein jeder Abschnitt (4) der Vielzahl von Abschnitten (4) durch eine Vielzahl von Stücken gebildet ist, wobei die Vielzahl von Abschnitten (4) mindestens einen ersten Abschnitt (4a) des Kalibrierungselements und mindestens einen zweiten Abschnitt (4b) des Kalibrierungselements, die zueinander versetzt sind, umfasst, wobei ein Rand (5) des ersten Abschnitts (4a), der sich entlang einer Richtung (F) erstreckt, fluchtend zu einem Rand (6) des zweiten Abschnitts (4b), der an den ersten Abschnitt (4a) angrenzt, angeordnet ist, wobei die Vielzahl von Abschnitten (4) eine erste Linie (7) von ersten Abschnitten (4a) und eine zweite Linie (8) von zweiten Abschnitten (4b) umfasst, wobei sich die erste Linie (7) und die zweite Linie (8) quer zur Richtung (F) erstrecken, die ersten Abschnitte (4a), die entlang der ersten Linie (7) angeordnet sind, in Bezug auf die zweiten Abschnitte (4b), die entlang der zweiten Linie (8) angeordnet sind, versetzt sind, ein nicht bedruckter Bereich (17) zwischen zwei ersten Abschnitten (4a), die entlang der ersten Linie (7) angeordnet sind, und zwischen zwei zweiten Abschnitten (4b), die entlang der zweiten Linie (8) angeordnet sind, eingesetzt ist, wobei grafische Referenzzeichen (9) auf die Oberfläche (2) des Druckträgers (1; 11; 21) gedruckt sind und die grafischen Referenzzeichen außerhalb eines jeden Abschnitts (4) angeordnet sind, um einen Abschnitt (4) des Kalibrierungselements zu verorten, der von einer Druckvorrichtung gemessen werden kann.

15. Druckträger (31a; 31b; 41a; 41b), aufweisend eine Oberfläche (2), auf die mindestens ein erster Abschnitt (4a) eines Kalibrierungselements gedruckt ist, **dadurch gekennzeichnet, dass** mindestens ein Teil eines zweiten Abschnitts (4b) des Kalibrierungselements bedruckt ist, wobei der mindestens eine erste Abschnitt (4a) und der mindestens eine Teil des zweiten Abschnitts (4b) zueinander versetzt sind und ein Rand (5) des mindestens einen ersten Abschnitts (4a), der sich entlang einer Richtung (F) erstreckt, fluchtend zu einem Rand (6) des mindestens einen Teils des zweiten Abschnitts (4b), der an den mindestens einen ersten Abschnitt (4a) angrenzt, angeordnet ist.

16. Druckträgermittel, **dadurch gekennzeichnet, dass** sie eine Vielzahl von Druckträgern (51a, 51b, 51c, 51d) umfassen, wobei auf einen jeden davon ein Abschnitt (4) des Kalibrierungselements gedruckt ist, eine Identifizierungsnummer auf einen jeden Druckträger (51a, 51b, 51c, 51d) gedruckt und mit dem entsprechenden Abschnitt (4) des Kalibrierungselements assoziiert ist, die Identifizierungsnummer dazu bestimmt ist, das Kalibrierungselement zu identifizieren, nachdem eine Vielzahl von Stücken eines jeden Abschnitts (4) durch eine Messvorrichtung gemessen wurde, wobei ein jeder Abschnitt (4) eines jeden Druckträgers (51a, 51b, 51c, 51d) zudem von grafischen Referenzzeichen (9) umgeben ist, um den Abschnitt (4) zu verorten.

## Revendications

1. Procédé comprenant les étapes de :
- fournir un dispositif d'impression à jet d'encre ;
- fournir un moyen de support d'impression (100, 200, 300, 400) délimité par une surface d'impression (2) ;
- imprimer un élément d'étalonnage sur le moyen de support d'impression (100, 200, 300, 400) à l'aide du dispositif d'impression à jet d'encre, en déplaçant le moyen de support d'impression (100, 200, 300, 400) et le dispositif d'impression à jet d'encre l'un par rapport à l'autre le long d'une direction d'avancement (F),
- utiliser un dispositif de mesure, effectuer une pluralité de mesures partielles de parties respectives de l'élément d'étalonnage imprimé sur le moyen de support d'impression (100, 200, 300, 400) ;
- étalonner le dispositif d'impression à jet d'encre en traitant les informations obtenues lors des mesures partielles,
**caractérisé en ce que** l'élément d'étalonnage a des dimensions supérieures aux dimensions de la zone d'acquisition d'image maximale du dispositif de mesure et **en ce que**, pour étalonner le dispositif d'impression à jet d'encre, il est prévu de reconstruire l'élément d'étalonnage en combinant des informations obtenues à partir des mesures partielles desdites parties de l'élément d'étalonnage qui a été imprimé sur le moyen de support d'impression (100 ; 200 ; 300 ; 400), les mesures partielles étant effectuées en positionnant le dispositif de mesure sur une région de la surface d'impression (2) et en acquérant l'image de l'une desdites parties de l'élément d'étalonnage, en déplaçant le dispositif de mesure sur une autre région de la surface d'impression (2) et en acquérant l'image de la partie correspondante de l'élément d'étalonnage, et ainsi de suite jusqu'à ce que l'ensemble de l'élément d'étalonnage ait été mesuré.

2. Procédé selon la revendication 1, dans lequel, au cours de l'étape consistant à imprimer l'élément d'étalonnage, au moins une partie d'une image virtuelle (16) de l'élément d'étalonnage est imprimée, l'image virtuelle (16) comprenant une pluralité de portions (4) de l'élément d'étalonnage, ladite pluralité de portions (4) comprenant au moins une première portion (4a) et au moins une seconde portion (4b) décalées les unes par rapport aux autres, un bord (5) de la première portion (4a) qui s'étend parallèlement à la direction d'avancement (F) étant aligné sur un bord (6) de la seconde portion (4b).

3. Procédé selon la revendication 2, dans lequel la pluralité de portions (4) comprend une pluralité de premières portions (4a) agencées le long d'une première ligne (7) et une pluralité de secondes portions (4b) agencées le long d'une seconde ligne (8), la première ligne (7) et la seconde ligne (8) s'étendant transversalement à la direction d'avancement (F), les premières portions (4a) agencées le long de la première ligne (7) étant décalées par rapport aux secondes portions (4b) agencées le long de la seconde ligne (8).

4. Procédé selon la revendication 2 ou 3, dans lequel le moyen de support d'impression (100 ; 200 ; 300) comprend un seul support d'impression (1 ; 11 ; 21) sur lequel l'image virtuelle entière (16) de l'élément d'étalonnage est imprimée.

5. Procédé selon la revendication 2 ou 3, dans lequel le moyen de support d'impression (100 ; 200 ; 300) comprend une pluralité de supports d'impression (31a, 31b ; 41a, 41b; 51a, 51b, 51c, 51d), une partie de l'image virtuelle (16) de l'élément d'étalonnage étant imprimée sur chaque support d'impression (31a, 31b ; 41a, 41b ; 51a, 51b, 51c, 51d).

6. Procédé selon la revendication 5, dans lequel une seule portion (4a, 4b) de ladite pluralité de portions (4a, 4b) de l'image virtuelle (16) de l'élément d'étalonnage est imprimée sur chaque support d'impression (51a, 51b, 51c, 51d).

7. Procédé selon la revendication 5, dans lequel une portion incomplète (4c, 4d, 4e, 4f) de la pluralité de portions (4) est imprimée sur au moins un support d'impression (31a, 31b, 41a, 41b), ladite portion incomplète (4c, 4d, 4e, 4f) étant incluse dans une portion (4) qui est entièrement imprimée sur un autre support d'impression (31a, 31b ; 41a, 41b) du moyen de support d'impression (100 ; 200 ; 300).

8. Procédé selon l'une quelconque des revendications 2 à 7, dans lequel chaque portion du (4) comprend une pluralité de régions colorées (12, 13, 14, 15) agencées en une séquence le long de la direction d'avancement (F), chaque région colorée (12, 13, 14, 15) comprenant au moins une ligne de pièces qui ont une densité d'impression constante le long d'une direction perpendiculaire à la direction d'avancement (F) et une densité d'impression augmentant ou diminuant progressivement le long de la direction d'avancement (F).

9. Procédé selon l'une quelconque des revendications 2 à 8, dans lequel des signes de référence graphiques (9) sont imprimés sur la surface (2) du moyen de support d'impression (100 ; 200 ; 300), les signes de référence graphiques étant disposés à l'extérieur des portions (4), par exemple délimitant chaque portion (4), et étant utilisables pour localiser une portion (4) de l'élément d'étalonnage qui peut être mesurée par le dispositif de mesure.

10. Procédé selon la revendication 3, dans lequel une zone non imprimée (17) est interposée entre deux premières portions (4a) agencées le long de la première ligne (7), et entre deux secondes portions (4b) agencées le long de la seconde ligne (8).

11. Procédé selon la revendication 1, dans lequel l'élément d'étalonnage comprend au moins une région colorée (412, 413, 414, 415 ; 416) qui a une largeur (K), mesurée perpendiculairement à la direction d'avancement (F), égale à la largeur maximale pouvant être imprimée par le dispositif d'impression à jet d'encre.

12. Procédé selon la revendication 11, dans lequel l'élément d'étalonnage comprend une pluralité de signes de référence graphiques (409) agencés en amont et/ou en aval de ladite au moins une région colorée (412, 413, 414, 415 ; 416) par rapport à la direction d'avancement (F), les signes de référence graphiques (409) étant absents en dehors de la largeur (K) de ladite au moins une région colorée (412, 413, 414, 415 ; 416).

13. Procédé selon l'une quelconque revendication précédente, dans lequel le dispositif d'impression à jet d'encre comprend une pluralité de têtes d'impression et dans lequel l'étape consistant à étalonner vise à uniformiser la quantité d'encre émise par les têtes d'impression, pour une quantité prédéfinie d'encre demandée à chaque tête d'impression.

14. Support d'impression (1 ; 11 ; 21) ayant une surface (2) sur laquelle une pluralité de portions (4) d'un élément d'étalonnage est imprimée, **caractérisé en ce que** chaque portion (4) de ladite pluralité de portions (4) étant formée par une pluralité de pièces, ladite pluralité de portions (4) comprenant au moins une première portion (4a) de l'élément d'étalonnage et au moins une seconde portion (4b) de l'élément d'étalonnage décalées les unes par rapport aux autres, un bord (5) de la première portion (4a) qui s'étend le long d'une direction (F) étant alignée avec un bord (6) de la seconde portion (4b) adjacent à la première portion (4a), où la pluralité de portions (4) comprend une première ligne (7) de premières portions (4a) et une seconde ligne (8) de secondes portions (4b), la première ligne (7) et la seconde ligne (8) s'étendant transversalement à ladite direction (F), les premières portions (4a) agencées le long de la première ligne (7) étant décalées par rapport aux secondes portions (4b) agencées le long de la seconde ligne (8), une zone non imprimée (17) étant interposée entre deux premières portions (4a) agencées le long de la première ligne (7), et entre deux secondes portions (4b) agencées le long de la seconde ligne (8), dans laquelle des signes de référence graphiques (9) sont imprimés sur la surface (2) du support d'impression (1 ; 11 ; 21), les signes de référence graphiques étant agencés à l'extérieur de chaque portion (4) pour localiser une portion (4) de l'élément d'étalonnage qui peut être mesurée par un dispositif de mesure.

15. Support d'impression (31a ; 31b ; 41a ; 41b) ayant une surface (2) sur laquelle au moins une première portion (4a) d'un élément d'étalonnage est imprimée, **caractérisé en ce qu'**au moins une partie d'une seconde portion (4b) de l'élément d'étalonnage est imprimée, ladite au moins une première portion (4a) et ladite au moins une partie de la seconde portion (4b) étant décalées l'une par rapport à l'autre, un bord (5) de ladite au moins une première portion (4a) qui s'étend le long d'une direction (F) étant aligné sur un bord (6) de ladite au moins une partie de la seconde portion (4b) adjacent à ladite au moins une première portion (4a).

16. Moyen de support d'impression **caractérisé en ce qu'**ils comprend une pluralité de supports d'impression (51a, 51b, 51c, 51d) sur chacun desquels une portion (4) d'un élément d'étalonnage est imprimée, un numéro d'identification étant imprimé sur chaque support d'impression (51a, 51b, 51c, 51d) et associé à la portion (4) correspondante de l'élément d'étalonnage, le numéro d'identification étant destiné à identifier l'élément d'étalonnage après qu'une pluralité de pièces de chaque portion (4) a été mesurée par un dispositif de mesure, dans lequel chaque portion (4) de chaque support d'impression (51a, 51b, 51c, 51d) est en outre entourée de signes de référence graphiques (9) pour localiser ladite portion (4).
